# EUROPEAN PATENT APPLICATION

(11) **EP 4 674 877 A1**
(43) Date of publication of application: **07.01.2026**
(21) Application number: 23952101.6
(22) Date of filing: 14.12.2023
(51) Int. Cl.: C08F 265/04, H01M 4/62, H01M 4/13, H01M 4/133, H01M 4/134, H01M 10/0525, H01M 10/42, C08F 285/00, C08F 283/06, C08F 220/18, C08F 220/06, C08F 220/48, C08F 220/56, C08F 220/54, C08F 220/46, C08F 216/14, C08F 216/04, C08F 2/26, C08F 2/30

(54) **SOLUTION TYPE BINDER, PREPARATION METHOD THEREFOR, AND USE THEREOF**

(30) Priority: 11.09.2023 CN 202311159605
(71) Applicant: Wanhua Chemical (Yantai) Battery Material Science Co., Ltd, Yantai, Shandong 264006 (CN); Wanhua Chemical Group Battery Technology Co., Ltd, Yantai, Shandong 264006 (CN)
(72) Inventor: WANG, Xiao, Yantai, Shandong 264006 (CN); MA, Jiquan, Yantai, Shandong 264006 (CN); JIA, Yuanfeng, Yantai, Shandong 264006 (CN); YUAN, Man, Yantai, Shandong 264006 (CN); SUN, Yongjian, Yantai, Shandong 264006 (CN); JI, Xueshun, Yantai, Shandong 264006 (CN); SUN, Jiakuan, Yantai, Shandong 264006 (CN)
(74) Representative: Potter Clarkson
(86) International application number: PCT/CN2023/138681
(87) International publication number: WO 2025/055178

(57) **Abstract**

The present application discloses a solution type binder, a preparation method therefor, and a use thereof. The preparation of the binder mainly comprises the following steps: first, carrying out emulsion polymerization on an alkyl acrylate monomer, a nitrile monomer, and a functional monomer acid to prepare latex particles, wherein the latex particles are uniform in particle size and rich in polar functional groups, and can be used as seeds for precipitation polymerization; using the nitrile monomer, the functional monomer acid, acrylamide, etc. as precipitation polymerization monomers, and depositing an oligomer, which is generated by reaction, on the surface of a seed polymer under the action of hydrogen bonds and hydrophobicity to form precipitation particles; and neutralizing the precipitation particles and alkali liquor to obtain the solution type binder. The solution type binder provided by the present application is suitable for a negative electrode of a lithium ion battery, and has high bonding strength, a low electrolyte solution swelling degree, certain processing flexibility, a simple preparation process, and good batch stability.

## Description

### Technical field

The present application relates to the field of polymer materials technology, such as binders, and particularly relates to a solution-type binder for the negative electrodes of lithium-ion batteries.

### Background technology

The negative electrode binder is an important polymer material in lithium-ion batteries, whose primary function is to adhere the negative electrode active materials (such as graphite, silicon-carbon, silicon, etc.), conductive agents and the like onto the current collector. Although the amount of binder used is not very large (accounts for about 1.5% to 5% of the negative electrode material), the good or bad of the performance of the binder has a significant impact on the performance of lithium batteries, such as specific capacity, coulombic efficiency, internal resistance, cycle life, and the like.

Currently, the most widely used negative electrode binder is styrene-butadiene rubber (SBR) emulsion, which requires the addition of carboxymethyl cellulose (CMC) as thickening agent and dispersing agent during use. The material composition determines that SBR/CMC contains a limited amount of polar functional groups such as carboxyl, ester and nitrile groups, resulting in a relatively weak interaction with negative electrode materials, especially silicon-carbon negative electrodes. Therefore, the comprehensive performance of batteries, especially their low-temperature performance, has become increasingly difficult to meet application requirements. Polyacrylic acid based binders contain a high content of polar functional groups in the polymer. Therefore, during charging and discharging processes, there exists complexation and decomplexation between the polar functional groups and lithium-ions, which can promote lithium-ions conduction and reduce the internal resistance of the battery. In addition, polyacrylic acid based binders can form hydrogen bonding interactions with the surface of silicon negative electrodes, improving the dispersion and adhesion to the negative electrode material, thereby inhibiting the volume expansion of the negative electrode active material during charging and discharging processes, improving the performance of the Solid Electrolyte Interface (SEI) film to prevent the decomposition of the electrolyte during electrochemical cycling.

CN109777328B discloses an aqueous binder for negative electrodes of lithium-ion battery, which is prepared through emulsion polymerization of hard monomers, soft monomers, functional monomers, acidic monomers and crosslinking agents. This binder can maintain good liquid absorption rate, bonding force and charge-discharge performance. CN111057184A discloses a method for preparing a water-based binder for negative electrode plates, utilizing soap-free emulsion polymerization method. By copolymerizing hydrophilic monomers, lipophilic monomers and functional monomers, the surface tension of the water-based binder is reduced, the dispersion time is short, thereby the production efficiency of negative electrode plates could be improved. The emulsion-type polyacrylic acid based binders prepared by the aforementioned method usually contain a higher proportion of electrolyte-philic components, such as acrylic esters, which exhibit relatively high degree of swelling in the electrolyte, resulting in relatively large rebound of the plates and relatively poor high-temperature cycling performance.

CN111500228B discloses a solution-type polyacrylic acid-based binders for batteries. This binder is a polymer with both hydrophilic and hydrophobic units simultaneously. It precipitates in water and becomes salt dissolved in water after adding alkali solution. In the prepared binder polymer, low and medium molecular weight polymers account for below 5 wt% of the total polymer (the molecular weight of the low and medium molecular weight polymers is less than or equal to 100,000), and has relatively strong bonding force. The solution-type binder prepared based on precipitation polymerization has characteristics such as high molecular weight and low oligomer residue, and it has advantages such as high bonding strength and good cycling performance when applied to negative electrodes of lithium-ion batteries. However, conventional precipitation polymerization requires that the polymerization monomers used have relatively good solubility in solvents, while the resulting copolymers have relatively low solubility in solvents and can separate out as nuclei to form a precipitate after the chain length reaches a critical value. Therefore, the types and added amounts of the polymerization monomers are highly limited. Commonly used copolymerization monomers such as acrylic acid, acrylamide and acrylonitrile, etc. are difficult to achieve a balance between bonding strength and flexibility of the electrode plate, and product performance still needs to be further improved. In addition, factors such as stirring and temperature etc. are easily affect the nucleation process of precipitation polymerization, thereby causing significant fluctuations in the molecular weight of the final product, and posing a great challenge to the stability of product batches.

### Summary of the invention

The following is a summary of the subject described in detail in this application. This summary is not intended to limit the scope of protection of the claims.

To address the aforementioned technical issues, the present application provides a solution-type binder, a preparation method thereof, and a use thereof. The solution-type binder is prepared using an aqueous phase seed precipitation polymerization process. Firstly, latex particles are obtained through emulsion polymerization of alkyl acrylate monomers, nitrile-based monomers and functional monomer acids. The latex particles are uniform in particle diameter and rich in polar functional groups, and can serve as seeds for precipitation polymerization. Using nitrile-based monomers, functional monomer acids, acrylamide and the like as monomers for precipitation polymerization, the oligomers generated by the reaction are deposited on the surface of the seed polymer under the hydrogen bonding and hydrophobic effect, ultimately forming precipitated particles. The morphology and size of the precipitated polymer particles can be regulated and controlled by varying the type and content of the added seeds, thereby enhancing the stability of the precipitation polymerization process. Moreover, the product is endowed with multifunctionality through the use of the seeds. For example, using copolymer particles with a low glass transition temperature as seeds can improve the flexibility of the negative electrode binder.

The technical solution adopted in the present application is as follows:
In a first aspect, the present application provides a method for preparing a solution-type binder, comprising the following steps:
   1) adding emulsifier and water into a reaction kettle as a base, stirring, and heating to a set temperature;
   2) adding emulsifier, water, alkyl acrylate monomer, nitrile-based monomer and functional monomer acid into kettle I for pre-emulsification to obtain a seed pre-emulsion;
   3) adding deionized water, nitrile-based monomer, functional monomer acid and amide-based monomer into kettle II and mixing evenly to obtain a monomer mixed liquid for shell layer;
   4) dripping the seed pre-emulsion and an initiator solution into the reaction kettle simultaneously, with a dripping time of 0.5 hours to 1 hour, and continuing to maintain the temperature for 15 minutes to 30 minutes after the dripping is completed;
   5) adjusting the temperature inside the reaction kettle to a set temperature, dripping the monomer mixed liquid for shell layer and an initiator solution simultaneously, with a dripping time of 2 hours to 4 hours, and continuing to maintain the temperature for 1 hour to 2 hours after the dripping is completed;
   6) cooling the temperature of the reaction system to room temperature, collecting a polymer precipitate, and dispersing the polymer precipitate in deionized water to obtain a dispersion solution;
   7) heating the dispersion solution obtained in step 6) to a temperature of 70°C to 90°C, adding an alkali solution to adjust pH to 7-8, continuing to maintain the temperature for 1 hour to 2 hours after the pH stabilizes; cooling down, and discharging to obtain the solution-type binder.

In one embodiment, the seed pre-emulsion comprises, in terms of mass ratio of raw materials, 0.1-0.9% of emulsifier, 20-30% of water, 35-50% of alkyl acrylate monomer, 10-20% of nitrile-based monomer and 15-25% of functional monomer acid.

In one embodiment, the monomer mixed liquid for shell layer comprises, in terms of mass ratio of raw materials, 20-30% of water, 10-40% of amide-based monomers, 20-50% of nitrile-based monomers and 15-30% of functional monomer acid.

In one embodiment, a mass ratio of monomers (including the alkyl acrylate monomer, the nitrile-based monomer and the functional monomer acid) in the seed pre-emulsion to monomers (including the amide-based monomer, the nitrile-based monomer and the functional monomer acid) in the monomer mixed liquid for shell layer is (2-30):(70-95).

In one embodiment, the alkyl acrylate monomer is at least one of ethyl (meth)acrylate, n-butyl (meth)acrylate, tert-butyl (meth)acrylate, sec-butyl (meth)acrylate, n-hexyl (meth)acrylate, n-octyl (meth)acrylate, isooctyl (meth)acrylate and dodecyl (meth)acrylate.

In one embodiment, the nitrile-based monomer is selected from acrylonitrile and/or methacrylonitrile.

In one embodiment, the functional monomer acid is selected from at least one of acrylic acid, methacrylic acid, itaconic acid, crotonic acid, fumaric acid and maleic acid; optionally methacrylic acid.

In one embodiment, the amide-based monomer is selected from at least one of acrylamide, N-methylacrylamide, N-ethylacrylamide, N,N-dimethylacrylamide, N,N-diethylacrylamide, 2-methylacrylamide, N-(hydroxymethyl)acrylamide, N-(hydroxyethyl)acrylamide and N-(hydroxypropyl)acrylamide; optionally acrylamide.

In one embodiment, the emulsifier is selected from surfactants containing at least one olefinic unsaturated functional group. Optionally, the emulsifier is selected from at least one of allyloxy isomer alcohol ether sulfate ammonium salt, allyl polyether phosphate ester, allyl-containing specialty mercaptan sulfate salt, allyl polyoxyalkylene ether sulfate salt, allyl alkyl succinate sulfonate salt, allyl ether hydroxypropyl sulfonate salt and polyoxyethylene styrenated phenyl ether sulfate salt. Appropriate examples include, but are not limited to, SR-10 (allyloxy isomer alcohol ether sulfate ammonium salt) from Adeka and V-100P (allyl polyether phosphate emulsifier) from Shanghai Honesty Fine Chemical Co., Ltd.

In one embodiment, the initiator is one or more of organic peroxide initiators, inorganic peroxide initiators and redox initiators. Optionally, the initiator is selected from at least one of ammonium persulfate, sodium persulfate, potassium persulfate, ammonium persulfate and isoascorbic acid, hydrogen peroxide and sodium bisulfite.

In one embodiment, the total amount of the initiator used accounts for 0.01% to 2% of the sum of the mass of alkyl acrylate monomer, functional monomer acid, nitrile-based monomer and amide-based monomer, optionally 0.1% to 0.5%.

In one embodiment, the neutralizing agent is one or more of inorganic alkali metal hydroxides and inorganic metal carbonate salts, optionally, the neutralizing agent is selected from one or more of sodium hydroxide, lithium hydroxide and sodium carbonate.

In one embodiment, the amount of water added during the preparation process is based on a solid content of the polymeric product achieving 10% to 40%, with an optional range of 15% to 30%, and a solid content of the solution-type binders achieving 1% to 15%, with an optional range of 3% to 8%.

In one embodiment, the temperature is set to be 75-90°C in step 1).

In one embodiment, the temperature is set to be 25-80°C in step 5).

In a second aspect, the present application provides a solution-type binder prepared by the method according to the first aspect, wherein the solution-type binder has a solid content ranging from 1% to 15%.

In one embodiment, the solution-type binder has a solid content ranging from 3% to 8%.

In a third aspect, the present application further provides use of the solution-type binder obtained by the preparation method as described above in negative electrode plates of lithium-ion battery. The solution-type binder is suitable for negative electrode active materials such as artificial graphite, natural graphite, hard carbon, silicon and silicon-carbon, etc. The negative electrode plates can be prepared and assembled to obtain lithium-ion batteries using methods well known in the art.

The present application has the following beneficial effects:
(1) The present application employs a seed precipitation polymerization process. Initially, latex particles rich in polar functional groups are prepared through emulsion polymerization. These particles are then used as seeds, and nitrile-based monomers, carboxylic acid monomers and amide-based monomers are used as comonomers, the oligomers generated by the reaction are deposited on the surface of the polymer seeds under the hydrogen bonding and hydrophobic effects, ultimately forming precipitated particles. The number and particle size of the seeds can be controlled, thereby enhancing the stability of the precipitation polymerization process.
(2) The solution-type binder of the present application comprises a seed copolymer obtained through emulsion polymerization and a shell layer copolymer obtained through precipitation polymerization. The seed copolymer contains a large amount of acrylic ester based monomers, exhibits good affinity for electrolytes, can reduce the internal resistance of lithium-ion batteries, and has a relatively low glass transition temperature, which can improve the flexibility of the electrode plates. The shell layer copolymer obtained through precipitation polymerization has a high molecular weight and is rich in polar functional groups, which can enhance the bonding force and inhibit the rebound of the electrode plate.
(3) The solution-type binder of the present application is rich in carboxyl groups. The presence of the carboxyl groups enhances the interaction between the polymer and the negative electrode active material, conductive agent, and dispersing agent, which is beneficial for stable dispersion of the slurry. In addition, the large number of carboxyl groups endows the polymer with relatively strong thickening effect, which can reduce the amount of thickening agent added during the slurry preparation process.
(4) The emulsifier used in the seed preparation process of the present application is a surfactant containing at least one olefinic unsaturated functional group, which can participate in polymerization and graft onto the polymer, providing good colloidal stability to the latex particles, while reducing the residue of small molecular substances and effectively improving the electrochemical stability of lithium-ion batteries.
(5) The solution-type binder of the present application is rich in nitrile groups and amide groups, which can form relatively strong hydrogen bonding interactions between copolymers, thereby enhancing the interaction force between the binder and the negative electrode active material as well as the current collector. Furthermore, there is complexation and decomplexation between polar functional groups and lithium-ions, which can promote lithium-ion conduction and reduce internal resistance of batteries.

After reading and understanding the detailed description, other aspects can be clarified.

### Detail descriptions

The following specific examples are provided to further illustrate the present application. The examples described in the present application are merely used as illustrations of the present application and do not limit the scope of the present application.

The main raw materials and sources thereof in Examples and Comparative Examples are shown in Table 1:

**Table 1. Main raw materials and sources**

| English abbreviation | Compound | Manufacturer |
|---|---|---|
| ST | Styrene | Wanhua Chemical Group Co., Ltd. |
| 2-MST | 2-Methyl styrene | Shanghai Macklin Biochemical Technology Co., Ltd. |
| 4-MST | 4-Methyl styrene | Shanghai Macklin Biochemical Technology Co., Ltd. |
| EHA | Isooctyl acrylate | Shanghai Hansi Chemical Co., Ltd. |
| BA | n-Butyl acrylate | Wanhua Chemical Group Co., Ltd. |
| EA | Ethyl acrylate | Shanghai Dongtu Chemical Co., Ltd. |
| MAA | Methacrylic acid | Wanhua Chemical Group Co., Ltd. |
| AA | Acrylic acid | Wanhua Chemical Group Co., Ltd. |
| IA | Itaconic acid | Aladdin Reagent |
| AM | Acrylamide | SNF China WATER SCIENCE Co., Ltd. |
| DMAA | N,N-Dimethylacrylamide | Aladdin Reagent |
| 2-MAM | 2-Methylacrylamide | Aladdin Reagent |
| AN | Acrylonitrile | Wanhua Chemical Group Co., Ltd. |
| MAN | Methacrylonitrile | Hunan Huateng Pharmaceutical Co., Ltd. |
| APS | Ammonium persulfate | United Initiators Hefei Co., Ltd. |
| SR-10 | Allyloxy isomer alcohol ether sulfate ammonium salt emulsifier (SR-10) | Adeka, Japan |
| V-100P | Allyl polyether phosphate emulsifier (V-100P) | Shanghai Honesty Fine Chemical Co., Ltd. |
| NRS-10 | Allyl-containing specialty mercaptan sulfate salt emulsifier (NRS-10) | Shanghai Honesty Fine Chemical Co., Ltd. |
| SDS | Sodium dodecyl sulfate | Sinopharm Group Chemical Reagent Co., Ltd. |

Unless otherwise specified, all other chemical reagents used in the respective examples were purchased from the market and were of analytical grade purity.

The testing methods employed in the following examples of the present application are as follows.

Evaluation of slurry dispersibility: the appearance of the prepared negative electrode plate after baking was observed, including cracks, curling, black spots, and pits on the electrode plate.

Evaluation of electrolyte swelling: The binder emulsion was dried into a film in an oven at 50°C, and a film sheet with a mass of M₁ was taken. The film sheet was immersed in the electrolyte, placed in an oven and maintained at 60°C for 48 hours. The electrolyte on the surface of the film sheet was wiped off with filter paper, and the weight was recorded as M₂. The electrolyte swelling degree was calculated as (M₂ - M₁)/M₁ × 100%.

Evaluation of peel strength: The test method for peel strength referred to the American Society for Testing and Materials standard ASTM D3330, using a computer-controlled tensile testing machine (KJ-1065).

Unless otherwise specified, the "parts" of raw materials in each example refers to "parts by mass".

### Example 1

(1) 0.03 parts of SR-10 and 1400 parts of deionized water were added into a reaction kettle, stirring was initiated and the rotation speed was set to 200 r/min, nitrogen was introduced to remove oxygen, and heated to 85°C;
(2) 0.2 parts of SR-10, 8 parts of deionized water, 10 parts of EHA, 5 parts of AN, and 5 parts of MAA were sequentially added into the pre-emulsification kettle I, and stirring was initiated to obtain a seed pre-emulsion;
(3) 90 parts of deionized water, 60 parts of AA, 60 parts of AM, and 90 parts of AN were added into the mixing kettle II, and stirring was initiated to obtain a monomer mixed liquid for shell layer;
(4) the seed pre-emulsion and an APS solution (0.3 parts of APS dissolved in 10 parts of deionized water) were dropped simultaneously, with the dropping time controlled to 1 hour, and continued to maintain the temperature for 30 minutes after the dripping was completed;
(5) the temperature inside the reaction kettle was adjusted to 50°C. After the temperature stabilized, the monomer mixed liquid for shell layer and a pre-prepared initiator solution (oxidizer: 0.3 parts of APS dissolved in 40 parts of deionized water; reducing agent: 0.15 parts of IAA (isoascorbic acid) dissolved in 40 parts of deionized water) were added dropwise simultaneously, with the dripping time controlled to 3 hours, and continued to maintain the temperature for 2 hours after the dripping was completed;
(6) after the temperature inside the reaction kettle was reduced to room temperature, the polymer precipitate was collected by filtration and dispersed in 4000 parts of deionized water; and
(7) the dispersion solution of precipitate particles was heated to 80°C, and after the temperature stabilized, a lithium hydroxide solution (with a mass concentration of 15%) was added as a neutralizing agent to adjust the pH to approximately 8.0. After the pH stabilized, the temperature was maintained for an additional 1.5 hours. After being cooled to room temperature, the material was filtered and discharged to obtain a solution-type binder.

### Example 2-8

An emulsion-type binder was prepared using a method essentially identical to that of Example 1, with the only difference being the selection and amounts of each raw material used, which were varied according to Table 2.

### Example 9

A solution-type binder was prepared using the method described in Example 1, with the difference being adjustments made to the following raw materials and operational steps: the initiator used in the raw materials was changed from APS to potassium persulfate; in operational step (1), the temperature of the reaction kettle was adjusted to 75°C; in step (4), the dripping time was 30 minutes, and the time for maintaining the temperature was 15 minutes; in step (5), the dripping time for the monomer mixed liquid for shell layer and the initiator solution was controlled at 2 hours, and the time for maintaining the temperature was 1 hour; and in step (7), the neutralization temperature was controlled at 70°C, and the temperature was maintained for an additional 2 hours after the pH value stabilized.

### Example 10

A solution-type binder was prepared using the method and raw materials described in Example 1, with the difference being adjustments made to the following raw materials and operational steps: the initiator used in the raw materials was changed from APS to sodium persulfate; in operational step (1), the temperature of the reaction kettle was adjusted to 90°C; in step (4), the dropping time was 45 minutes, and the time for maintaining the temperature was 20 minutes; in step (5), the dropping time for the monomer mixed liquid for shell layer and the initiator solution was controlled at 4 hours, and the time for maintaining the temperature was 1.5 hours; in step (7), the neutralization temperature was controlled at 90°C, and the temperature was maintained for an additional 1 hour after the pH value stabilized.

### Comparative Example 1

Compared with the method in Example 1, steps (1), (2) and (4) were omitted. A monomer aqueous solution for shell layer was prepared in step (3), and a binder prepared from hard monomer for shell layer was then prepared directly starting from step (5).

### Comparative Example 2

Compared with the method in Example 1, only steps (1), (2) and (4) were performed, no hard monomers for shell layer were added, and an emulsion-type binder was obtained.

### Comparative Example 3

Compared with the method in Example 1, the difference lies in that SDS was used instead of SR-10.

The solution-type binders prepared in the examples and the binders of the comparative examples were applied to the preparation of negative electrode plates of the lithium-ion batteries, with the specific steps as follows:
(1) Slurry preparation: At room temperature, 0.5 parts of carboxymethylcellulose sodium (CMC-Na) was added to 100 parts of deionized water, followed by high-speed stirring for about 20 minutes, and then, 1 part of conductive agent carbon black (Super P), 96.5 parts of negative electrode active material (graphite), and 2 parts of solution-type binder were added, respectively. Each material was stirred at high speed for about 10 minutes after addition to mix evenly. A negative electrode slurry was obtained after filtering through 100-mesh sieve.
(2) Coating of electrode plate: The prepared negative electrode slurry was uniformly coated onto a current collector (copper foil) with a coating thickness of 100 µm, placed in an oven at 80°C and dried for 5 minutes, and then rolled by a roller press at room temperature to obtain a negative electrode plate with a thickness of 70 µm.

The electrolyte swelling test was conducted on each of the prepared solution-based binders of the examples and the binders of the comparative examples, and the slurry dispersibility, peel strength and electrochemical performance of the prepared negative electrode plates were evaluated. The test results are shown in Table 3.

As can be seen from the performance results in Table 3, compared with Comparative Example 1, the slurry prepared using the binder obtained from Examples 1-10 exhibits a relatively good dispersion performance, and the electrode plates have a relatively good flexibility. This is because the copolymer in the core layer, prepared by emulsion polymerization, is rich in acrylic ester monomers with a relatively low glass transition temperature, which contributes to improved flexibility. The binder prepared without using seed emulsion showed cracking, indicating issues in its processability. Compared with Comparative Example 2, the film sheets prepared using the binder obtained from Examples 1-10 exhibit a lower electrolyte swelling degree, and the prepared electrode plates demonstrate higher peel strength. This is because the copolymer in the shell layer, prepared by precipitation polymerization, possesses a high molecular weight and is rich in polar functional groups, which can form relatively good hydrogen bonding interactions between molecules, thereby exhibiting relatively good electrolyte resistance and high peel strength. Compared with Comparative Example 3, the reactive-type emulsifier used in the Examples features high adhesion force and low electrolyte swelling. This is because SDS emulsifier tends to remain free in the binder and migrate upon exposure to electrolyte immersion, making it difficult to maintain the morphology of the latex particles and resulting in reduced adhesion force.

**Table 2: Parts by mass of each raw material in the Examples (Ex.) and the Comparative Examples (Comp. Ex.)**

| | | | Ex. 1 | Ex. 2 | Ex. 3 | Ex. 4 | Ex. 5 | Ex. 6 | Ex. 7 | Ex. 8 | Comp. Ex. 1 | Comp. Ex. 2 | Comp. Ex. 3 |
|---|---|---|---|---|---|---|---|---|---|---|---|---|---|
| Seed pre-emulsion | Water | H₂O | 8 | 15 | 9.8 | 7 | 8 | 8 | 8 | 8 | 0 | 8 | 8 |
| | Emulsifier | SR-10 | 0.2 | 0 | 0 | 0.2 | 0.2 | 0.2 | 0.2 | 0.2 | 0 | 0.2 | 0.2 |
| | | V-100P | 0 | 0.07 | 0 | 0 | 0 | 0 | 0 | 0 | 0 | 0 | 0 |
| | | NRS-10 | 0 | 0 | 0.05 | 0 | 0 | 0 | 0 | 0 | 0 | 0 | 0 |
| | Acrylate Monomer | EHA | 10 | 0 | 0 | 13.6 | 0 | 0 | 0 | 0 | 0 | 10 | 10 |
| | | BA | 0 | 0 | 14 | 0 | 10 | 10 | 10.5 | 10 | 0 | 0 | 0 |
| | | EA | 0 | 30.5 | 0 | 0 | 0 | 0 | 0 | 0 | 0 | 0 | 0 |
| | Nitrile-based monomer | AN | 5 | 0 | 0 | 0 | 5 | 5 | 5.5 | 5 | 0 | 5 | 5 |
| | | MAN | 0 | 6.2 | 3.75 | 4 | 0 | 0 | 0 | 0 | 0 | 0 | 0 |
| | Carboxylic acid monomer | MAA | 5 | 9.5 | 0 | 8.2 | 0 | 0 | 0 | 0 | 0 | 5 | 5 |
| | | AA | 0 | 0 | 5.5 | 0 | 5 | 0 | 0 | 5 | 0 | 0 | 0 |
| | | IA | 0 | 0 | 0 | 0 | 0 | 5 | 5 | 0 | 0 | 0 | 0 |
| Monomer mixed liquid for Shell layer | water | H₂O | 90 | 90 | 90 | | 70 | 50 | 50 | 200 | 90 | 0 | 90 |
| | Nitrile-based monomer | AN | 90 | 90 | 90 | 90 | 165 | 0 | 0 | 495 | 90 | 0 | 90 |
| | | MAN | 0 | 0 | 0 | 0 | 0 | 47 | 60 | 0 | 0 | 0 | 0 |
| | Carboxylic acid monomer | AA | 60 | 0 | 0 | 60 | 50 | 44 | 55 | 150 | 60 | 0 | 60 |
| | | MAA | 0 | 60 | 0 | 0 | 0 | 0 | 0 | 0 | 0 | 0 | 0 |
| | | IA | 0 | 0 | 60 | 0 | 0 | 0 | 0 | 0 | 0 | 0 | 0 |
| | Amide-based monomer | AM | 60 | 0 | 0 | 60 | 50 | 94 | 18.5 | 150 | 60 | 0 | 60 |
| | | DMAA | 0 | 60 | 0 | 0 | 0 | 0 | 0 | 0 | 0 | 0 | 0 |
| | | 2-MAM | 0 | 0 | 60 | 0 | 0 | 0 | 0 | 0 | 0 | 0 | 0 |

**Table 3: Performance Test Results**

| Performance | Slurry dispersibility | Film formation condition of electrode plate | Electrolyte swelling degree (%) | Peel strength (N/m) |
|---|---|---|---|---|
| Example 1 | Normal | Not cracked | 15 | 11.0 |
| Example 2 | Normal | Not cracked | 20 | 10.8 |
| Example 3 | Normal | Not cracked | 12 | 11.0 |
| Example 4 | Normal | Not cracked | 18 | 11.2 |
| Example 5 | Normal | Not cracked | 12 | 12.8 |
| Example 6 | Normal | Not cracked | 15 | 13.5 |
| Example 7 | Normal | Not cracked | 18 | 11.7 |
| Example 8 | Normal | Not cracked | 12 | 12.9 |
| Example 9 | Normal | Not cracked | 11 | 11.6 |
| Example 10 | Normal | Not cracked | 16 | 12.3 |
| Comparative Example 1 | Particle | Cracked | 8 | 13.0 |
| Comparative Example 2 | Normal | Not cracked | 40 | 6.5 |
| Comparative Example 3 | Normal | Not cracked | 59 | 7.2 |

## Claims

1. A method for preparing a solution-type binder, comprising the following steps:
1) adding emulsifier and water into a reaction kettle as a base, stirring, and heating to a set temperature;
2) adding emulsifier, water, alkyl acrylate monomer, nitrile-based monomer and functional monomer acid into kettle I for pre-emulsification to obtain a seed pre-emulsion;
3) adding deionized water, nitrile-based monomer, functional monomer acid and amide-based monomer into kettle II and mixing evenly to obtain a monomer mixed liquid for shell layer;
4) dripping the seed pre-emulsion described in step 2) and an initiator solution into the reaction kettle simultaneously, with a dripping time of 0.5 hours to 1 hour, and continuing to maintain the temperature for 15 minutes to 30 minutes after the dripping is completed;
5) adjusting the temperature inside the reaction kettle to a set temperature, dripping the monomer mixed liquid for shell layer described in step 3) and an initiator solution simultaneously, with a dripping time of 2 hours to 4 hours, and continuing to maintain the temperature for 1 hour to 2 hours after the dripping is completed;
6) cooling the temperature of the reaction system to room temperature, collecting a polymer precipitate, and dispersing the polymer precipitate in deionized water to obtain a dispersion solution;
7) heating the dispersion solution obtained in step 6) to a temperature of 70°C to 90°C, adding an alkali solution to adjust pH to 7-8, continuing to maintain the temperature for 1 hour to 2 hours after the pH stabilizes; cooling down, and discharging to obtain the solution-type binder.

2. The method according to claim 1, wherein the seed pre-emulsion comprises, in terms of mass ratio of raw materials, 0.1-0.9% of emulsifier, 20-30% of water, 35-50% of alkyl acrylate monomer, 10-20% of nitrile-based monomer and 15-25% of functional monomer acid.

3. The method according to any one of claims 1 or 2, wherein the monomer mixed liquid for shell layer comprises, in terms of mass ratio of raw materials, 20-30% of water, 10-40% of amide-based monomer, 20-50% of nitrile-based monomer and 15-30% of functional monomer acid.

4. The method according to any one of claims 1 to 3, wherein a mass ratio of monomers (including the alkyl acrylate monomer, the nitrile-based monomer and the functional monomer acid) in the seed pre-emulsion to monomers (including the amide-based monomer, the nitrile-based monomer and the functional monomer acid) in the monomer mixed liquid for shell layer is (2-30):(70-95).

5. The method according to any one of claims 1 to 4, wherein the nitrile-based monomer is selected from acrylonitrile and/or methacrylonitrile.

6. The method according to any one of claims 1 to 5, wherein the functional monomer acid is selected from at least one of acrylic acid, methacrylic acid, itaconic acid, crotonic acid, fumaric acid and maleic acid.

7. The method according to any one of claims 1 to 6, wherein the amide-based monomer is selected from at least one of acrylamide, N-methylacrylamide, N-ethylacrylamide, N,N-dimethylacrylamide, N,N-diethylacrylamide, 2-methylacrylamide, N-(hydroxymethyl)acrylamide, N-(hydroxyethyl)acrylamide and N-(hydroxypropyl)acrylamide.

8. The method according to any one of claims 1 to 7, wherein the emulsifier is selected from surfactants containing at least one olefinic unsaturated functional group.

9. The method according to claim 8, wherein the emulsifier is selected from at least one of allyloxy isomer alcohol ether sulfate ammonium salt, allyl polyether phosphate ester, allyl-containing specialty mercaptan sulfate salt, allyl polyoxyalkylene ether sulfate salt, allyl alkyl succinate sulfonate salt, allyl ether hydroxypropyl sulfonate salt and polyoxyethylene styrenated phenyl ether sulfate salt.

10. The method according to claim 9, wherein the emulsifier is selected from SR-10 from Adeka and/or V-100P from Shanghai Honesty Fine Chemical Co., Ltd.

11. A solution-type binder prepared according to the method of any one of claims 1 to 10, wherein the solution-type binder has a solid content ranging from 1% to 15%.

12. The solution-type binder according to claim 11, wherein the solution-type binder has a solid content ranging from 3% to 8%.

13. Use of the solution-type binder according to claim 11 or 12 in a negative electrode plate of lithium-ion battery.
